# EUROPEAN PATENT APPLICATION

(11) **EP 4 814 849 A1**
(43) Date of publication of application: **30.09.2026**
(21) Application number: 24893167.7
(22) Date of filing: 28.10.2024
(51) Int. Cl.: G06Q 30/06

(54) **OBJECT PROCESSING METHOD AND APPARATUS, DEVICE AND STORAGE MEDIUM**

(30) Priority: 22.11.2023 CN 202311569390
(71) Applicant: BEIJING YOUZHUJU NETWORK TECHNOLOGY CO. LTD., Beijing 101299 (CN)
(72) Inventor: HU, Lele, Beijing 100028 (CN); ZHANG, Yulan, Beijing 100028 (CN)
(74) Representative: Grünecker Patent- und Rechtsanwälte PartG mbB
(86) International application number: PCT/CN2024/127922
(87) International publication number: WO 2025/108009

(57) **Abstract**

This disclosure provides a method, an apparatus, a device, and a storage medium for object processing. The method includes the following operations. First, target chat information is displayed on a chat page. The target chat information includes object information of a target resource object and object information corresponding to at least one sub-object. The at least one sub-object is predetermined from a set of sub-objects corresonnding to the target resource object. When a predetermined trigger operation for a first sub-object is received, the chat page jumps to an object detail page corresponding to the first sub-object, and the object detail page displays object detail information of the first sub-object. It can be seen that the embodiments of the present disclosure can share, based on the chat page, both the target resource object and the sub-object determined from the set of sub-objects corresponding to the target resource object, such that the shared-with user can directly trigger, via chat information, the display of the object detail information for any sub-object, thereby enriching object sharing methods and improving user experience.

## Description

This application claims the benefit of Chinese Patent Application No. 202311569390. X, entitled "METHOD, APPARATUS, DEVICE, AND STORAGE MEDIUM FOR OBJECT PROCESSING," filed November 22, 2023, the entire content of which is incorporated herein by reference.

### FIELD

The present disclosure relates to the field of data processing, and in particular, to a method, an apparatus, a device, and a storage medium for object processing.

### BACKGROUND

In the related art, a sharing user may share a browsed store object with a friend. The friend may browse information of the store object in the form of a chat message on a chat page between the two users. The sharing user may also share a browsed product object with a friend. The friend may browse information of the product object in the form of a chat message on the chat page between the two users.

However, the above object sharing manner cannot satisfy the increasingly diversified needs of users for object sharing.

### SUMMARY

In order to solve the above technical problems, embodiments of the present disclosure provide a method for object processing.

According to a first aspect, the present disclosure provides a method for object processing, the method including:
displaying target chat information on a chat page, the target chat information including object information of a target resource object and object information respectively corresponding to at least one sub-object, the at least one sub-object being predetermined from a set of sub-objects corresponding to the target resource object; and
jumping, in response to a preset trigger operation for a first sub-object among the at least one sub-object, from the chat page to an object detail page corresponding to the first sub-object, the object detail page having object detail information of the first sub-object presented thereon.

In an optional embodiment, the method further includes:
jumping, in response to a preset trigger operation for the target resource object, from the chat page to a resource detail page corresponding to the target resource object, the resource detail page having information of sub-objects in the set of sub-objects corresponding to the target resource object presented thereon.

In an optional embodiment, the jumping from the chat page to the object detail page corresponding to the first sub-object in response to the preset trigger operation for the first sub-object includes:
displaying, in response to the preset trigger operation for the first sub-object, a resource detail page corresponding to the target resource object, and presenting object detail information corresponding to the first sub-object on the resource detail page in a preset panel form.

In an optional embodiment, after presenting on the resource detail page in a preset panel form object detail information corresponding to a second sub-object, the method further includes:
displaying, in response to a preset trigger operation for the preset panel, the object detail page corresponding to the first sub-object, and presenting object detail information corresponding to the first sub-object on the object detail page.

In an optional embodiment, the target chat information is triggered based on a sharing operation for the target resource object.

In an optional embodiment, the at least one sub-object is predetermined from the set of sub-objects corresponding to the target resource object based on target object data and/or historical interaction data.
where the target object data includes object acquisition data and/or activity object data, the object acquisition data characterizes acquisition conditions of respective sub-objects in the set of sub-objects, and the activity object data characterizes whether the respective sub-objects in the set of sub-objects belong to a preset promotional activity object, and the historical interaction data includes object acquisition data for the set of sub-objects associated with a sharing user and/or a shared-with user corresponding to the target resource object.

In an optional embodiment, the object information of the target resource object includes an icon and/or a name of the target resource object, and the object information corresponding to the sub-object includes an object image and/or object description information.

According to a second aspect, the present disclosure further provides an apparatus for object processing, the apparatus including:
a first display module configured to display target chat information on a chat page, the target chat information including object information of a target resource object and object information respectively corresponding to at least one sub-object, the at least one sub-object being predetermined from a set of sub-objects corresponding to the target resource object; and
a first jump module configured to jump, in response to a preset trigger operation for a first sub-object among the at least one sub-object, from the chat page to an object detail page corresponding to the first sub-object, the object detail page having object detail information of the first sub-object presented thereon.

According to a third aspect, the present disclosure further provides a computer-readable storage medium having instructions stored thereon, and the instructions, when executed on a terminal device, cause the terminal device to implement the methods described above.

According to a fourth aspect, the present disclosure further provides a device for object processing including a memory, a processor and a computer program stored in the memory and executable on the processor, and the processor executes the computer program to implement the methods described above.

According to a fifth aspect, the present disclosure further provides a computer program product. The computer program product includes computer programs/instructions which, when executed by a processor, implement the methods described above.

### BRIEF DESCRIPTION OF DRAWINGS

The accompanying drawings are incorporated into the specification and constitute a part of the specification, illustrating embodiments in accordance with the present disclosure, and, together with the specification, are used to explain principles of the present disclosure.

In order to more clearly illustrate the technical solutions of the embodiments of the present disclosure or of the related art, the drawings to be used in the description of the embodiments or the related art will be briefly described below. Obviously, those skilled in the art can obtain other drawings based on these drawings without inventive effort.
FIG. 1 is a flowchart of a method for object processing according to an embodiment of the present disclosure;
FIG. 2 is a schematic diagram of a chat page according to an embodiment of the present disclosure;
FIG. 3 is a schematic diagram of an object detail page according to an embodiment of the present disclosure;
FIG. 4 is a schematic diagram of a resource detail page of a target resource object according to an embodiment of the present disclosure;
FIG. 5 is a flowchart of another method for object processing according to an embodiment of the present disclosure;
FIG. 6 is a schematic diagram of another resource detail page of a target resource object according to an embodiment of the present disclosure;
FIG. 7 is a schematic diagram of a sharing information presentation panel according to an embodiment of the present disclosure;
FIG. 8 is a data interaction diagram for a method for object processing according to an embodiment of the present disclosure;
FIG. 9 is a schematic structural diagram of an apparatus for object processing according to an embodiment of the present disclosure;
FIG. 10 is a schematic structural diagram of a device for object processing according to an embodiment of the present disclosure.

### DETAILED DESCRIPTION

In order to more clearly understand the above objectives, features, and advantages of the present disclosure, the solutions of the present disclosure are further described below. It should be noted that, where there is no conflict, the embodiments of the present disclosure and the features in the embodiments may be combined with each other.

In the following description, many specific details are set forth for a comprehensive understanding the present disclosure. However, the present disclosure may also be implemented in other ways different from those described herein. It is obvious that the embodiments in the specification are only part of the embodiments of the present disclosure, and not all of the embodiments.

With the growing demand of users for diversified sharing methods, how to further enrich object sharing methods, meet user needs, and thereby improve user experience has become an urgent technical problem to be solved.

In the related art, a sharing user may share a browsed store object with a friend. The friend may browse information of the store object in the form of a chat message on a chat page between the two users. The sharing user may also share a browsed product object with a friend. The friend may browse information of the product object in the form of a chat message on the chat page between the two users. However, the above object sharing manner cannot satisfy the increasingly diversified needs of users for object sharing.

To this end, embodiments of the present disclosure provide a method for object processing. Specifically, target chat information is displayed on a chat page. The target chat information includes object information of a target resource object and object information respectively corresponding to at least one sub-object. The at least one sub-object is predetermined from a set of sub-objects corresponding to the target resource object. When a predetermined trigger operation for a first sub-object is received, the chat page jumps to an object detail page corresponding to the first sub-object. The object detail page presents object detail information of the first sub-object. It can be seen that the embodiments of the present disclosure can share, based on the chat page, both the target resource object and the sub-object determined from the set of sub-objects corresponding to the target resource object, such that the shared-with user can directly trigger, via chat information, the presentation of the object detail information for any sub-object, thereby enriching object sharing methods and improving user experience.

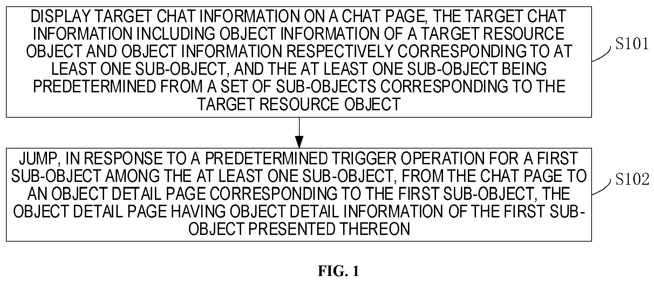

FIG. 1 is a flowchart of an object processing method according to an embodiment of the present disclosure.

At S101, target chat information is displayed on a chat page.

The target chat information includes object information of a target resource object and object information respectively corresponding to at least one sub-object. The at least one sub-object is predetermined from a set of sub-objects corresponding to the target resource object.

The method for object processing according to embodiments of the present disclosure may be applied to a client, for example, a client deployed on a smartphone, a client deployed on a tablet computer, and the like.

In embodiments of the present disclosure, the target chat information may be triggered based on a sharing operation for the target resource object. The target resource object may be any resource object, which is shared by a sharing user to a shared-with user in the form of a chat message. The target resource object has the corresponding set of sub-objects, from which the at least one sub-object is predetermined and may be shared together with the target resource object by the sharing user to the shared-with user in the form of a chat message.

The target resource object may be a store object, and the set of sub-objects corresponding to the target resource object may include product objects in the store object. The at least one sub-object predetermined from the set of sub-objects refers to at least one product object determined from the product objects in the store object.

In embodiments of the present disclosure, the at least one sub-object predetermined from the set of sub-objects corresponding to the target resource object may include a sub-object predetermined from the set of sub-objects corresponding to the target resource object based on target object data and/or historical interaction data.

The target object data includes object acquisition data and/or activity object data. The object acquisition data characterizes acquisition conditions of respective sub-objects in the set of sub-objects, for example, sales data, repurchase data, and the like of a product object.

The activity object data characterizes whether the respective sub-objects in the set of sub-objects belong to a predetermined promotional activity object, for example, whether a product object belongs to a promotional product object in a current promotional activity.

The historical interaction data includes object acquisition data for the set of sub-objects associated with a sharing user and/or a shared-with user corresponding to the target resource object. For example, the historical interaction data may include acquisition conditions of product objects in the store object by the user sharing the store object, or acquisition conditions of product objects in the store object by the user with whom the store object is shared.

In embodiments of the present disclosure, the target chat information displayed on the chat page includes the object information of the target resource object and the object information respectively corresponding to at least one sub-object.

Specifically, the object information of the target resource object may include an icon and/or a name of the target resource object. The object information corresponding to the respective at least one sub-object may include an object image and/or object description information of each sub-object.

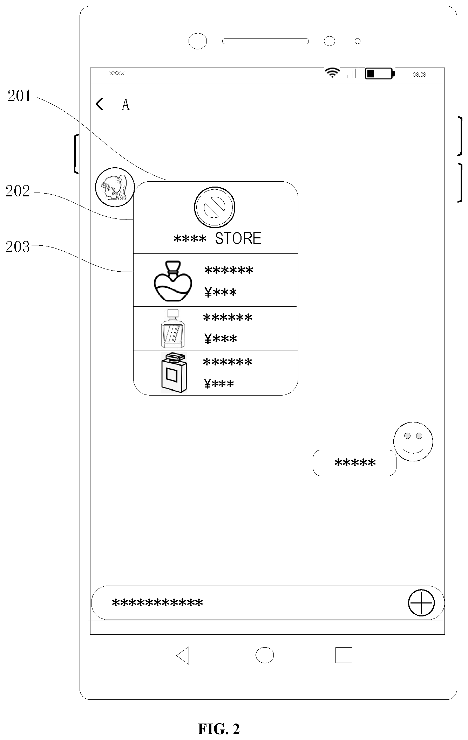

As shown in FIG. 2, a schematic diagram of a chat page according to an embodiment of the present disclosure is provided. The chat page is a chat page between user A and user B. The target chat information 201 displayed on the chat page includes an icon and a name corresponding to the target resource object 202, and further includes an object image and object description information of the sub-object 203. The object image may present the corresponding sub-object, and the object description information refers to description information of the sub-object, which may include feature information, value information, and the like of the sub-object. Optionally, the target chat information 201 may be presented in the form of a message card.

At S102, in response to a predetermined trigger operation for a first sub-object among the at least one sub-object, the chat page jumps to an object detail page corresponding to the first sub-object.

On the object detail page, object detail information of the first sub-object is presented.

In embodiments of the present disclosure, when the predetermined trigger operation for the first sub-object among the sub-objects displayed on the chat page is received, the chat page jumps to the object detail page corresponding to the first sub-object, and the object detail information of the first sub-object is presented on the object detail page.

The first sub-object may be any sub-object in the target chat information displayed on the chat page. Predetermined trigger operations for different sub-objects may trigger the display of different page contents.

In an optional embodiment, when the predetermined trigger operation for the first sub-object on the chat page is received, a resource detail page corresponding to the target resource object is displayed. On the resource detail page, the object detail information corresponding to the first sub-object is presented in form of a predetermined panel. The object detail information of the first sub-object is presented on the object detail page.

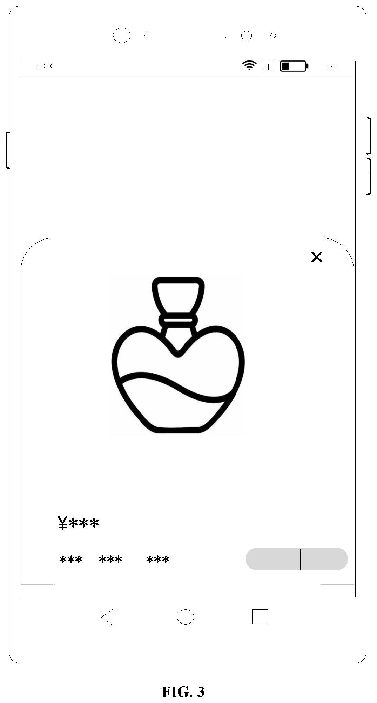

As shown in FIG. 3, a schematic diagram of an object detail page according to an embodiment of the present disclosure is provided. The object detail page presents the object detail information of the first sub-object, for example, including feature information, value information, purchase link information, and the like of the first sub-object.

In another optional embodiment, in response to a predetermined trigger operation for the predetermined panel, such as a swiping-up operation, the object detail page corresponding to the first sub-object is displayed in full screen, and the object detail information corresponding to the first sub-object is presented on the object detail page.

In yet another optional embodiment, when a panel close operation for the predetermined panel is received, the predetermined panel is closed, that is, the object detail page of the first sub-object is exited. At this time, the resource detail page corresponding to the target resource object may remain presented.

Based on the above description, for the object information of the target resource object in the target chat information displayed on the chat page, if a predetermined trigger operation for the target resource object is received, the chat page jumps to the resource detail page corresponding to the target resource object, so that information of the respective sub-objects in the set of sub-objects corresponding to the target resource object may be browsed through the resource detail page, thereby implementing the function of sharing, based on the chat page, resource objects such as store objects.

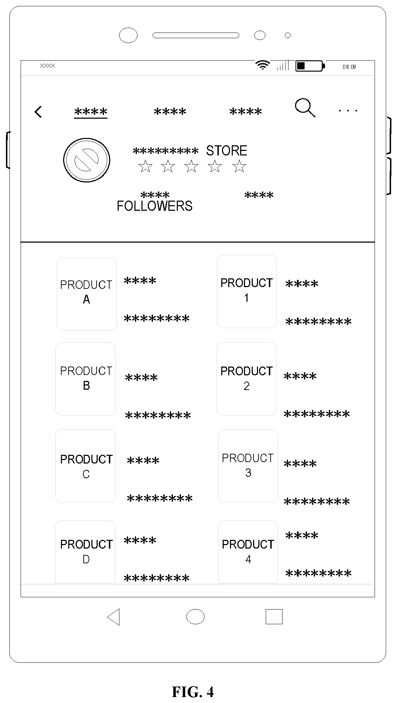

As shown in FIG. 4, a schematic diagram of a resource detail page of a target resource object according to an embodiment of the present disclosure is provided. The resource detail page presents information of the respective sub-objects in the set of sub-objects corresponding to the target resource object.

In the method for object processing according to embodiments of the present disclosure, target chat information is first displayed on a chat page. The target chat information includes object information of the target resource object and object information respectively corresponding to at least one sub-object. The at least one sub-object is predetermined from a set of sub-objects corresponding to the target resource object. When a predetermined trigger operation for a first sub-object is received, the chat page jumps to an object detail page corresponding to the first sub-object, and the object detail page presents object detail information of the first sub-object. It can be seen that embodiments of the present disclosure can share, based on the chat page, both the target resource object and the sub-object determined from the set of sub-objects corresponding to the target resource object, such that the shared-with user can directly trigger, via chat information, the presentation of the object detail information for any sub-object, thereby enriching object sharing methods and improving user experience.

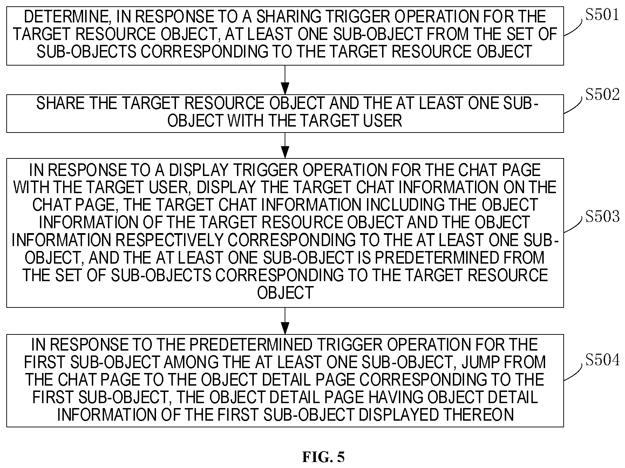

Based on the foregoing embodiments, the method for object processing according to embodiments of the present disclosure may be applied to a client on the sharing side. As shown in FIG. 5, a flowchart of another method for object processing according to an embodiment of the present disclosure is provided, which will be specifically described below.

At S501, in response to a sharing trigger operation for the target resource object, at least one sub-object is determined from the set of sub-objects corresponding to the target resource object.

In embodiments of the present disclosure, a sharing user (hereinafter referred to as user A) may, during the process of browsing the target resource object, trigger a sharing operation for the target resource object.

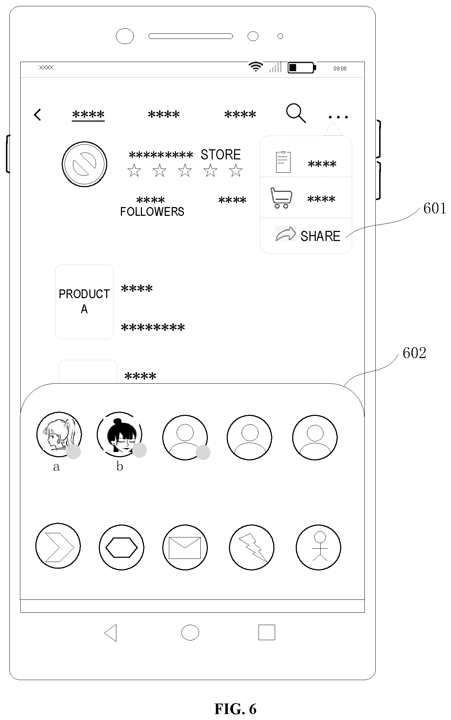

As shown in FIG. 6, a schematic diagram of another resource detail page of a target resource object according to an embodiment of the present disclosure is provided. In response to the trigger operation performed on the resource detail page of the target resource object, a sharing control 601 is displayed on the resource detail page. When a trigger operation for the sharing control 601 is received, a sharing information presentation panel 602 is displayed on the resource detail page of the target resource object, and the sharing information presentation panel 602 presents a friend list of user A, including friends a, b, and so on.

In embodiments of the present disclosure, when the sharing information presentation panel is displayed on the resource detail page of the target resource object, if a trigger operation for selecting a target sharing user (hereinafter referred to as user B) for the target resource object is received, the object information of the target sub-object corresponding to the target resource object is displayed. The target sub-object belongs to the at least one sub-object determined from the set of sub-objects corresponding to the target resource object.

In an optional embodiment, when a selection operation for the target sharing user (user B) on the sharing information presentation panel is received, the object information of the target sub-object corresponding to the target resource object is additionally displayed on the sharing information presentation panel so as to prompt user A to share the target sub-object with user B.

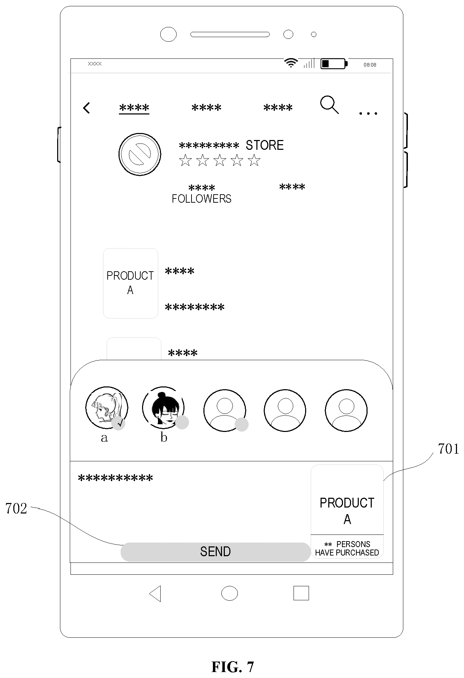

As shown in FIG. 7, a schematic diagram of a sharing information presentation panel according to an embodiment of the present disclosure is provided. In the sharing information presentation panel, friend a is shown in a selected state, that is, friend a is the target shared-with user, that is, user B. In addition, the sharing information presentation panel further displays object information of a target sub-object 701 corresponding to the target resource object.

Further, when the display area of the sharing information presentation panel is relatively large, object information respectively corresponding to multiple target sub-objects may be displayed on the sharing information presentation panel, and the object information of the target resource object may also be displayed, so as to prompt simultaneous sharing of multiple target sub-objects and the target resource object.

At S502, the target resource object and the at least one sub-object are shared with the target user.

In an optional embodiment, a sending control 702 may further be displayed on the sharing information presentation panel. When a trigger operation for the sending control 702 is received, sharing of the target resource object and the at least one sub-object with the target shared-with user, that is, user B, is triggered, and a sharing notification message is displayed. The sharing notification message is used to indicate that the sharing to the target shared-with user has been successfully completed. The display style or display position of the sharing notification message is not limited in the present disclosure.

In an optional embodiment, when the trigger operation for the sharing control is received, the user identifier of the target shared-with user (user B) and the object identifiers respectively corresponding to the target resource object and the at least one sub-object are sent to a target server. The at least one sub-object includes the target sub-object. The target server is configured to send the object information respectively corresponding to the target resource object and the at least one sub-object to a user device of the target shared-with user.

At S503, in response to a display trigger operation for the chat page with the target user, the target chat information is displayed on the chat page.

The target chat information includes the object information of the target resource object and the object information respectively corresponding to the at least one sub-object. The at least one sub-object is predetermined from the set of sub-objects corresponding to the target resource object.

At S504, in response to the predetermined trigger operation for the first sub-object among the at least one sub-object, the chat page jumps to the object detail page corresponding to the first sub-object.

The object detail page presents object detail information of the first sub-object.

In the client on the sharing side, after the target resource object and the at least one sub-object are successfully shared with the target shared-with user (user B), the chat page with the target shared-with user may further be triggered to be displayed. On the chat page, the target chat information is displayed. The target chat information includes the object information of the target resource object and the object information respectively corresponding to at least one sub-object.

In embodiments of the present disclosure, the operation of triggering display of the chat page with the target shared-with user may include triggering display of the chat page by clicking a display area of the sharing notification message.

In the client on the shared-with side, after he notification message is received, the chat page with the sharing user (user A) may be triggered to be displayed, and the target chat information is displayed on the chat page, so as to achieve the effect that user A shares the target resource object and the at least one sub-object with user B through a chat message.

In practical applications, in order to support the function of sharing of the target resource object and the at least one sub-object, in embodiments of the present disclosure, for both the clients on the sharing side and the client on the shared-with side, the target chat information displayed on the chat page can support trigger operations for the target resource object and the at least one sub-object.

In embodiments of the present disclosure, the target chat information displayed on the chat page may be presented in the form of a message card. The message card includes multiple areas. The multiple areas are respectively used for displaying the target resource object and the at least one sub-object, that is, each object corresponds to one area.

In practical applications, when the trigger operation such as clicking or long pressing for any one of the areas of the objects on the message card is received, the display of the detail information of the corresponding object is triggered. Different areas correspond to different page contents triggered for display.

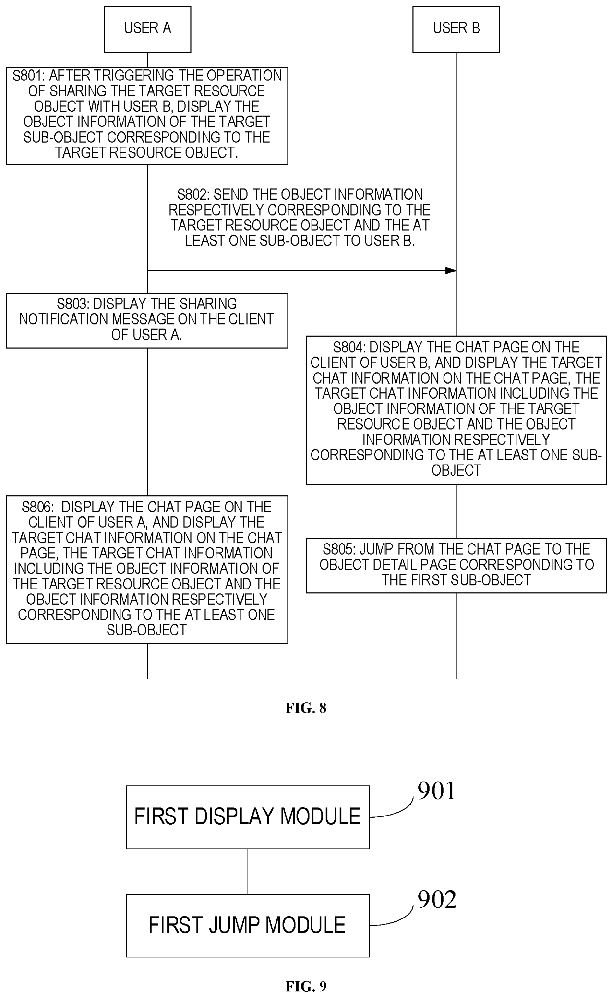

Based on the foregoing embodiments, embodiments of the present disclosure further provide a data interaction diagram for a method for object processing, as shown in FIG. 8, of which the operations will be described below.

At S801, after user A triggers the operation of sharing the target resource object with user B, the object information of the target sub-object corresponding to the target resource object is displayed. The target sub-object is determined from the set of sub-objects corresponding to the target resource object.

At S802, user A sends the object information respectively corresponding to the target resource object and the at least one sub-object to user B.

At S803, the sharing notification message is displayed on the client of user A. The sharing notification message is used to indicate that the sharing to user B has been successfully transmitted.

At S804, the chat page is displayed on the client of user B, and the target chat information is displayed on the chat page. The target chat information includes the object information of the target resource object and the object information respectively corresponding to the at least one sub-object. The at least one sub-object is predetermined from the set of sub-objects corresponding to the target resource object.

At S805, after the predetermined trigger operation for the first sub-object is received on the client of user B, the chat page jumps to the object detail page corresponding to the first sub-object.

At S806, the chat page is displayed on the client of user A, and the target chat information is displayed on the chat page. The target chat information includes the object information of the target resource object and the object information respectively corresponding to the at least one sub-object.

Embodiments of the present disclosure can share, based on the chat page, both the target resource object and the sub-object determined from the set of sub-objects corresponding to the target resource object, such that the shared-with user can directly trigger, via chat information, the presentation of the object detail information for any sub-object, thereby enriching object sharing methods and improving user experience.

Based on the foregoing method embodiments, the present disclosure further provides an apparatus for object processing. Referring to FIG. 9, a schematic structural diagram of an apparatus for object processing according to an embodiment of the present disclosure is provided, and the apparatus includes:
a first display module 901 configured to display target chat information on a chat page, the target chat information including object information of the target resource object and object information respectively corresponding to at least one sub-object, the at least one sub-object being predetermined from a set of sub-objects corresponding to the target resource object;
a first jump module 902 configured to jump, in response to a predetermined trigger operation for a first sub-object among the at least one sub-object, from the chat page to an object detail page corresponding to the first sub-object, the object detail page having object detail information of the first sub-object presented thereon.

In an optional embodiment, the apparatus further includes:
a second jump module configured to jump, in response to a predetermined trigger operation for the target resource object, from the chat page to a resource detail page corresponding to the target resource object, the resource detail page having information of sub-objects in the set of sub-objects corresponding to the target resource object presented thereon.

In an optional embodiment, the first jump module includes:
a display sub-module configured to display, in response to a predetermined trigger operation for the first sub-object among the at least one sub-object, a resource detail page corresponding to the target resource object, and present object detail information corresponding to the first sub-object on the resource detail page in form of a predetermined panel.

In an optional embodiment, the apparatus further includes:
a second display module configured to display, in response to a predetermined trigger operation for the predetermined panel, the object detail page corresponding to the first sub-object, and present object detail information corresponding to the first sub-object on the object detail page.

In an optional embodiment, the target chat information is triggered based on a sharing operation for the target resource object.

In an optional embodiment, the at least one sub-object is predetermined from the set of sub-objects corresponding to the target resource object based on target object data and/or historical interaction data.
where the target object data includes object acquisition data and/or activity object data, the object acquisition data characterizes acquisition conditions of respective sub-objects in the set of sub-objects, and the activity object data characterizes whether the respective sub-objects in the set of sub-objects belong to a predetermined promotional activity object; and the historical interaction data includes object acquisition data for the set of sub-objects corresponding to the target resource object associated with a sharing user and/or a shared-with user.

In an optional embodiment, the object information of the target resource object includes an icon and/or a name of the target resource object, and the object information corresponding to the sub-object includes an object image and/or object description information.

In the apparatus for object processing according to embodiments of the present disclosure, the target chat information is first displayed on the chat page. The target chat information includes the object information of the target resource object and the object information respectively corresponding to the at least one sub-object. The at least one sub-object is predetermined from the set of sub-objects corresponding to the target resource object. When the predetermined trigger operation for the first sub-object is received, the chat page jumps to the object detail page corresponding to the first sub-object. The object detail page has the object detail information of the first sub-object presented thereon. It can be seen that embodiments of the present disclosure can share, based on the chat page, both the target resource object and the sub-object determined from the set of sub-objects corresponding to the target resource object, such that the shared-with user can directly trigger, via chat information, the present of the object detail information for any sub-object, thereby enriching object sharing methods and improving user experience.

In addition to the foregoing methods and apparatuses, embodiments of the present disclosure further provide a computer-readable storage medium having instructions stored thereon, the instructions, when executed on a terminal device, causing the terminal device to implement the method for object processing according to embodiments of the present disclosure.

Embodiments of the present disclosure further provide a computer program product, the computer program product including a computer program/instructions which, when executed by a processor, implement the method for object processing according to embodiments of the present disclosure.

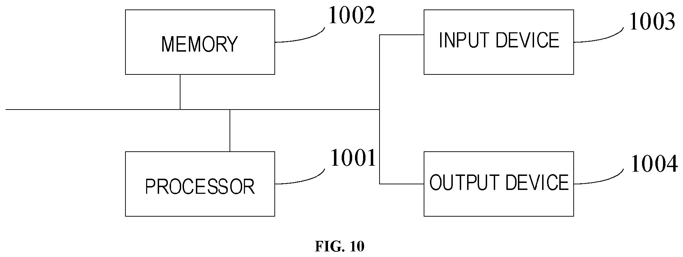

In addition, embodiments of the present disclosure further provide a device for object processing. Referring to FIG. 10, the device may include:
a processor 1001, a memory 1002, an input apparatus 1003, and an output apparatus 1004. The number of processors 1001 in the device for object processing may be one or more, and FIG. 10 illustrates an example with one processor. In some embodiments of the present disclosure, the processor 1001, the memory 1002, the input apparatus 1003, and the output apparatus 1004 may be connected through a bus or other means, and FIG. 10 illustrates an example with a bus connection.

The memory 1002 may be used to store software programs and modules, and the processor 1001 executes various functional applications and data processing of the device for object processing by running the software programs and modules stored in the memory 1002. The memory 1002 may mainly include a program storage area and a data storage area, where the program storage area may store an operating system, at least one application program required for a function, and the like. In addition, the memory 1002 may include high-speed random access memory and non-volatile memory, such as at least one disk storage device, flash memory device, or other non-volatile solid-state storage device. The input device 1003 may be used to receive input numerical or character information, and to generate signal inputs related to user settings and function control of the device for object processing.

Specifically, in the present embodiment, the processor 1001 may, according to the following instructions, load executable files corresponding to processes of one or more application programs into the memory 1002, and the application programs stored in the memory 1002 are run by the processor 1001, thereby implementing various functions of the device for object processing.

It should be noted that, in the present disclosure, relational terms such as "first" and "second" are merely used to distinguish one entity or operation from another entity or operation, without necessarily requiring or implying any actual relationship or order between the entities or operations. Moreover, the terms "comprise," "include," or any other variation thereof are intended to cover non-exclusive inclusion, so that a process, method, article, or device including a series of elements not only includes those elements, but may also include other elements not explicitly listed, or may also include inherent elements of such process, method, article, or device. Without further limitation, an element defined by the phrase "comprising ..." does not exclude the existence of other identical elements in a process, method, article, or device that includes the element.

The foregoing description is merely specific embodiments of the present disclosure, enabling those skilled in the art to understand or implement the present disclosure. Various modifications to these embodiments will be apparent to those skilled in the art, and the general principles defined herein may be implemented in other embodiments without departing from the spirit or scope of the present disclosure. Therefore, the present disclosure is not limited to the embodiments described herein, but is to be accorded the widest scope consistent with the principles and novel features disclosed herein.

## Claims

1. A method for object processing, comprising:
displaying target chat information on a chat page, the target chat information comprising object information of a target resource object and object information respectively corresponding to at least one sub-object, the at least one sub-object being predetermined from a set of sub-objects corresponding to the target resource object; and
jumping, in response to a predetermined trigger operation for a first sub-object among the at least one sub-object, from the chat page to an object detail page corresponding to the first sub-object, the object detail page having object detail information of the first sub-object presented thereon.

2. The method of claim 1, further comprising:
jumping, in response to a predetermined trigger operation for the target resource object, from the chat page to a resource detail page corresponding to the target resource object, the resource detail page having information of a sub-object in the set of sub-objects corresponding to the target resource object presented thereon.

3. The method of claim 1, wherein jumping from the chat page to the object detail page corresponding to the first sub-object in response to the predetermined trigger operation for the first sub-object comprises:
displaying, in response to the predetermined trigger operation for the first sub-object among the at least one sub-object, a resource detail page corresponding to the target resource object, and presenting object detail information corresponding to the first sub-object on the resource detail page in form of a predetermined panel.

4. The method of claim 3, wherein after presenting the object detail information corresponding to the second sub-object on the resource detail page in the form of the predetermined panel, the method further comprises:
displaying, in response to a predetermined trigger operation for the predetermined panel, the object detail page corresponding to the first sub-object, and presenting object detail information corresponding to the first sub-object on the object detail page.

5. The method of claim 1, wherein the target chat information is triggered based on a sharing operation for the target resource object.

6. The method of claim 5, wherein the at least one sub-object is predetermined from the set of sub-objects corresponding to the target resource object based on target object data and/or historical interaction data, and
wherein the target object data comprises object acquisition data and/or activity object data, the object acquisition data characterizes acquisition conditions of respective sub-objects in the set of sub-objects, the activity object data characterizes whether the respective sub-objects in the set of sub-objects belongs to a predetermined promotional activity object, and the historical interaction data comprises object acquisition data for the set of sub-objects associated with a sharing user and/or a shared-with user corresponding to the target resource object.

7. The method of claim 1, wherein the object information of the target resource object comprises an icon and/or a name of the target resource object, and the object information corresponding to the sub-object comprises an object image and/or object description information.

8. An apparatus for object processing, comprising:
a first display module configured to display target chat information on a chat page, the target chat information comprising object information of a target resource object and object information respectively corresponding to at least one sub-object, the at least one sub-object being predetermined from a set of sub-objects corresponding to the target resource object; and
a first jump module configured to jump, in response to a predetermined trigger operation for a first sub-object among the at least one sub-object, from the chat page to an object detail page corresponding to the first sub-object, the object detail page having object detail information of the first sub-object presented thereon.

9. A computer-readable storage medium, having instructions stored thereon, the instructions, when executed on a terminal device, causing the terminal device to implement the method of any of claims 1 to 7.

10. A device for object processing, comprising a memory, a processor, and a computer program stored in the memory and executable on the processor, the processor, when executing the computer program, implementing the method of any of claims 1 to 7.
